(19) Europäisches Patentamt / European Patent Office / Office européen des brevets

(11) **EP 3 605 139 B1**

(12) **EUROPÄISCHE PATENTSCHRIFT**

(45) Veröffentlichungstag und Bekanntmachung des Hinweises auf die Patenterteilung:
**09.09.2020 Patentblatt 2020/37**

(51) Int Cl.:
**G01S 7/481** (2006.01)   **G01S 17/08** (2006.01)
**G02B 13/00** (2006.01)

(21) Anmeldenummer: **19187267.0**

(22) Anmeldetag: **19.07.2019**

(54) **OPTOELEKTRONISCHER SENSOR UND VERFAHREN ZUR ERFASSUNG EINES OBJEKTS**

OPTOELECTRONIC SENSOR AND METHOD FOR DETECTING AN OBJECT

CAPTEUR OPTOÉLECTRONIQUE ET PROCÉDÉ DE DÉTECTION D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2018 DE 102018118653**

(43) Veröffentlichungstag der Anmeldung:
**05.02.2020 Patentblatt 2020/06**

(73) Patentinhaber: **SICK AG**
**79183 Waldkirch (DE)**

(72) Erfinder: **Gimpel, Dr. Hartmut**
**79194 Gundelfingen (DE)**

(56) Entgegenhaltungen:
**WO-A1-2017/146913    WO-A1-2019/025222
US-A1- 2018 052 234**

**Beschreibung**

Die Erfindung betrifft einen optoelektronischen Sensor und ein Verfahren zur Erfassung eines Objekts in einem Überwachungsbereich nach dem Oberbegriff von Anspruch 1 beziehungsweise 13.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen. Diese Art der Abstandsmessung wird auch als ToF (Time of Flight) oder LIDAR (Light Detection and Ranging) bezeichnet.

Um den Messbereich zu erweitern, kann der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. In den meisten Laserscannern wird die Abtastbewegung durch einen Drehspiegel erreicht. Es ist aber auch bekannt, stattdessen den gesamten Messkopf mit Lichtsendern und Lichtempfängern rotieren zu lassen, wie dies beispielsweise in DE 197 57 849 B4 beschrieben ist.

Um auch geringe Empfangsintensitäten nachweisen zu können, werden herkömmlich in manchen optoelektronischen Sensoren Lawinenphotodioden eingesetzt (APD, Avalanche Photo Diode). Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist, als bei einer einfachen PIN-Diode. Eine noch größere Empfindlichkeit wird mit Lawinenphotodioden erreicht, die im sogenannten Geiger-Modus betrieben werden (SPAD, Single Photon Avalanche Diode). Hierbei wird die Lawinenphotodiode oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. SPADs sind nicht nur hochempfindlich, sondern auch vergleichsweise kostengünstig. Zudem lassen sie sich mit wenig Aufwand auf einer Leiterkarte integrieren. Sie sind mit relativ großen Querabmessungen von 1 mm und mehr erhältlich, im Falle von Bildsensoren mit einer Vielzahl von SPADs auch größer, und weisen dennoch eine hohe Analogbandbreite auf.

In den meisten Fällen und besonders bei der Entfernungsmessung muss der Sensor zwischen Nutzlicht, beispielsweise eines eigenen oder zugeordneten Lichtsenders, und Umgebungslicht oder Störungen von anderen Lichtquellen unterscheiden können. Je nach Anwendung, etwa in besonders hellen Umgebungen, bei schlecht remittierenden Zielobjekten oder großen Messentfernungen, kann dies bei äußerst geringem Nutzlichtpegel eine sehr anspruchsvolle Aufgabe sein.

Eine bekannte Gegenmaßnahme ist die Verengung des Sichtfeldes mit einer Blende, die seitlich einfallendes Fremdlicht unterdrückt. So ist beispielsweise aus der EP 2 910 969 bekannt, vor einem Lichtempfänger mit Lawinenphotodioden im Geiger-modus eine Blende in der Fernfokalebene der Empfangslinse zu positionieren und zwischen Blende und Lichtempfänger ein optisches Trichterelement anzuordnen. Das sorgt für eine räumliche Fremdlichtausblendung und vorteilhafte homogene Lichtverteilung auf dem Lichtempfänger. Die EP 3 339 887 A1 schlägt alternativ zu einer mechanischen Blende eine Art elektronische Blende vor, die gezielt die Empfindlichkeit bestimmter SPADs nach einem vorgegebenen räumlichen Muster einstellt.

Fremdlicht kann auch spektral unterdrückt werden. Dazu wird ein optisches Bandpassfilter verwendet, das auf die Wellenlänge des Sendelichts abgestimmt ist, und das vor bei breitbandigem Fremdlicht wie Sonnenlicht für eine deutliche Verbesserung des Signal-Rausch-Verhältnisses sorgt. Je schmalbandiger das Bandpassfilter ausgeführt werden kann, ohne dabei Nutzlicht zu dämpfen, umso größer wird der Vorteil.

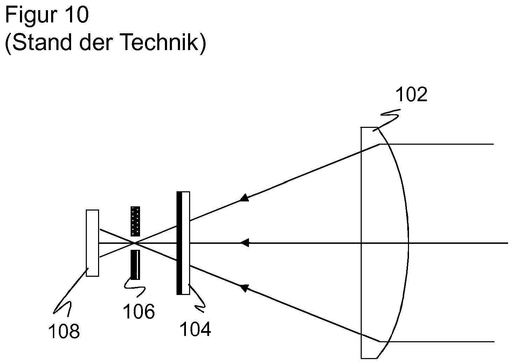

Figur 10 zeigt eine bekannte Lösung eines Empfangspfades mit einer Empfangslinse 102, einem optischen Bandpassfilter 104, einer Blende 106 und einem Lichtempfänger 108. Das Bandpassfilter 104 wird typischerweise als dielektrische Beschichtung auf einem planen Glassubstrat ausgeführt. Dann sind aber die spektralen Filterkanten abhängig vom Einfallswinkel. Für rotes Licht um 660 nm verschiebt ein handelsüblicher Bandpassfilter dieser Bauart seine Filterkanten beispielsweise um ca. 55 nm, wenn sich der Einfallswinkel von 0° auf 40° erhöht.

Nun könnte das Bandpassfilter 104 in der Nähe der Empfangslinse 102 im parallelen Strahlengang positioniert werden. Der relevante Einfallswinkel ist dann entsprechend klein, und die Filterkanten können sehr eng ausgeführt werden. Dafür muss aber das Bandpassfilter 104 eine große mechanische Abmessung erhalten und wird daher sehr teuer. Alternativ kann das Bandpassfilter 104 in die Nähe des Lichtempfängers 108 gesetzt werden. Dort ist das Strahlbündel geometrisch schon sehr klein, so dass ein entsprechend kleines und preisgünstiges Bandpassfilter 104 verwendet werden kann. Dafür werden aber die Einfallswinkel auf das Bandpassfilter 104 groß. Das liegt an dem großen Öffnungsverhältnis der Empfangslinse 102, die gezielt eine möglichst große Empfangsfläche in möglichst kurzem Abstand auf den Lichtempfänger 108 fokussiert, damit der Empfangspfad kurz bleibt und kleine Sensorbauweisen erlaubt. Die Strahldivergenzwinkel erreichen durchaus ±30° oder auch ±40°, und somit ist das oben gegebene Zahlenbeispiel einer Verschiebung der Filterkante um 55 nm realistisch.

Prinzipiell wäre eine Alternative, das Bandpassfilter 104 nicht mittels dielektrischer Beschichtungen zu realisieren, sondern eingefärbtes Glas zu verwenden. Dann bleiben die spektralen Filterkanten unabhängig vom Einfallswinkel. Solche schwermetallhaltigen Farbgläser sollten aber aufgrund der Umweltverträglichkeit möglichst vermieden werden.

Die DE 10 2015 224 715 A1 offenbart ein Sensorelement zur Entfernungsmessung mit einer Sammellinse vor dem Lichtsensor, die als Langpassfilter ausgebildet ist. Konkret wird das durch Einfärben der Sammellinse erreicht, ohne die hierzu schon genannten Nachteile zu erwähnen. Außerdem ist die Filterwirkung gegenüber einem Bandpassfilter schlechter, weil die längerwelligen Fremdlichtanteile weiterhin passieren können. Die US 4 106 855 zeigt ein optisches System mit einem Linsenelement, das eine sphärische Oberfläche mit integriertem schmalbandigem Bandpassfilter aufweist. Das Linsenelement selbst sowie die übrige Optikanordnung sind viel zu komplex, um als Empfangsoptik in einem gattungsgemäßen Lichttaster eingesetzt zu werden.

In der US 2017/0289524 A1 wird ein optisches System zum Erfassen von Abstandsinformationen beschrieben. Eine gemeinsame Empfangslinse fokussiert das Licht auf eine Vielzahl mechanischer Blenden, hinter denen jeweils eine kleine Sammellinse sitzt, die das Licht kollimiert, das dann durch ein optisches Bandpassfilter auf jeweilige Pixel eines Lichtempfängers trifft. Die kleinen Sammellinsen reduzieren zwar den Einfallswinkel, so dass das optische Bandpassfilter im gewünschten Wellenlängenbereich wirken kann. Sie müssen aber wegen des kurzen Abstands zum Pixel ein relativ großes Bildfeld haben. Das führt zwangsläufig dazu, dass das Bild unscharf wird, denn eine scharfe Abbildung über ein großes Bildfeld kann eine einzelne Sammellinse nicht leisten.

Die US 4 184 749 offenbart eine Anordnung aus einem sphärischen Linsenelement und einem konzentrischen, bogenförmigen Linsenelement, das an seiner Außenseite ein ebenfalls konzentrisches, bogenförmiges, schmalbandiges Bandpassfilter aufweist. Aufgabe der Anordnung ist, Licht aus einem großen Sichtfeld zu empfangen und so zu zerstreuen, dass die Strahlen radial das konzentrische Linsenelement verlassen, somit das bogenförmige Bandpassfilter senkrecht durchdringen. Um das Linsenelement mit dem Bandpassfilter zu realisieren, muss mit hohem Aufwand eine makroskopische gekrümmte Scheibe beschichtet werden, was sich für wettbewerbsfähige Herstellkosten verbietet. Die Anordnung ist auch nur für eine große Bildebene und damit einen großen Lichtempfänger gedacht. Für einen üblichen Lichtempfänger oder Pixel eines gattungsgemäßen Lichttasters ist die Anordnung nicht ausgelegt und wäre dafür ungeeignet.

Die nachveröffentlichte WO 2019/025222 A1 offenbart ein Lichtleiter-basiertes LiDAR-System mit einem Bandpassfilter am Eingang der empfangsseitigen Lichtleiter. Dem Bandpassfilter sind Linsenanordnungen vorgeordnet, von denen zwei konvexe und die dritte konkave Mikrolinsen aufweist.

Aus der US 2018/0052234 A1 ist ein optisches System zur Verwendung in einem LiDAR-System bekannt, das ein doppelten Sender- und Empfängersystem nutzt, wobei der Empfänger SPADS aufweist. Das optische System weist ein viellinsiges Objektiv auf, wobei an der Planseite von einer dieser Linsen eine Filterbeschichtung zur Bandpassfilterung vorgesehen sein kann.

Die WO 2017/146913 A1 befasst sich mit einem mehrelementigen Fabry-Perot-Interferometer für direktes LIDAR. In einer Ausführungsform sind in verschiedenen Pfaden des Interferometers eine konvexe und eine konkave Linse hintereinander angeordnet. Im Lichtpfad zu dieser Mehrpfadanordnung, der einen Lichtleiter aufweist, kann ein Bandpassfilter vorgesehen sein.

Es ist daher Aufgabe der Erfindung, die Fremdlichtunterdrückung mit einem optischen Filter zu verbessern.

Diese Aufgabe wird durch einen optoelektronischen Sensor, insbesondere Lichttaster, und ein Verfahren zur Erfassung eines Objekts in einem Überwachungsbereich nach Anspruch 1 beziehungsweise 13 gelöst. Ein Lichtsender erzeugt Sendelicht in einem bestimmten, vorzugsweise schmalen Wellenlängenbereich. Das Sendelicht wird als remittiertes Sendelicht wieder empfangen, nachdem es zumindest teilweise im Überwachungsbereich von einem Objekt zurückgeworfen wurde. Das entsprechende Empfangssignal eines Lichtempfängers wird ausgewertet, um eine optisch erfassbare Information über das Objekt zu gewinnen, wie eine binäre Anwesenheitsinformation, eine Position oder eine Farbe.

Im Empfangspfad des remittierten Sendelichts vor dem Lichtempfänger ist eine Empfangsoptik angeordnet, die ein erstes optisches Element zum Fokussieren aufweist, beispielsweise eine Haupt- oder Empfangslinse, möglicherweise auch ein Objektiv mit mehreren Linsen oder eine reflexive Anordnung. Ein zweites optisches Element begrenzt den Einfallswinkel, richtet also die einfallenden Strahlen zueinander aus, so dass sie eher parallel zueinander verlaufen. Ein optisches Filter ist auf den Wellenlängenbereich des Lichtsenders abgestimmt, um möglichst nur das remittierte Sendelicht passieren zu lassen und Fremdlicht außerhalb von dessen Spektrum auszublenden. Das zweite optische Element sorgt dafür, dass auf das optische Filter remittiertes Sendelicht mit einer begrenzten Strahlwinkeldivergenz fällt. Erstes optisches Element, zweites optisches Element und optisches Filter sind vorzugsweise in Einfallsrichtung des remittierten Sendelichts in dieser Reihenfolge angeordnet.

Die Erfindung geht von dem Grundgedanken aus, das zweite optische Element lichtzerstreuend auszubilden.

Im Falle einer Linse als zweites optisches Element ist das eine Zerstreulinse mit einer negativen und vorzugsweise kurzen Brennweite. Allerdings werden nachfolgend bevorzugte Ausführungsformen beschrieben, in denen das zweite optische Element gerade keine eigentliche Linse, sondern nicht-abbildend ist. Die lichtzerstreuenden Eigenschaften können insbesondere so ausgedrückt werden, dass das zweite optische Element am Rand dicker ist als in der Mitte, wie dies auch bei einer konkaven Linse der Fall ist.

Betrachtet man den Lichtempfänger gedanklich durch das zweite optische Element hindurch, dann erscheint es aufgrund der lichtzerstreuenden Eigenschaften kleiner als es ist, beispielsweise wird das virtuelle Bild nur noch halb so groß oder noch kleiner. Dabei wird der an eine konkave Linse angelehnte Begriff virtuelles Bild verwendet, obwohl das zweite optische Element insbesondere nicht-abbildend ist. Die Lichtstrahlen der großen Empfangslinse laufen nun auf dieses deutlich verkleinerte virtuelle Bild zu, das Sichtfeld ist also nur so groß wie bei einem gedachten kleineren Lichtempfänger. Gleichzeitig laufen die Lichtstrahlen, die nach dem fokussierenden ersten optischen Element noch konvergent sind, hinter dem zweiten optischen Element nur noch mit einem deutlich verringerten Winkel auf den Lichtempfänger zu.

Die Erfindung hat den Vorteil, dass das optische Filter enger auf den Wellenlängenbereich des Lichtsenders abgestimmt werden und so eine deutlich bessere Fremdlichtunterdrückung erreicht werden kann. Die Winkelabhängigkeit des optischen Filters kommt durch die Eigenschaften des zweiten optischen Elements und dessen stärkere Verringerung des Einfallswinkels weniger oder gar nicht zum Tragen. Das zweite optische Element wirkt als virtuelle Blende, genauer gesagt einer virtuellen Feldblende, ein zusätzliches mechanisches Blendenbauteil ist nicht mehr erforderlich. Somit wird das Fremdlicht räumlich und spektral verringert. Dadurch verbessert sich das Signal-Rausch-Verhältnis und letztlich die Leistungsfähigkeit des Sensors, etwa durch Erhöhung der Reichweite oder genauere Messwerte.

Der Lichtempfänger weist bevorzugt eine Vielzahl von Lichtempfangselementen auf, insbesondere Lawinenphotodiodenelemente im Geiger-Modus beziehungsweise SPADs. Die Vielzahl von Lichtempfangselementen kann diskret oder als integrierte Pixel realisiert sein und wahlweise einer Ortsauflösung oder einer kombinierten Auswertung dienen. Gerade bei SPADs ist eine statistische gemeinsame Auswertung vorteilhaft, welche die Empfangssignale mehrerer SPADs gemeinsam betrachtet oder aufsummiert.

Das zweite optische Element weist erfindungsgemäß nicht-abbildende Eigenschaften auf. Das zweite optische Element ist i keine klassische Zerstreulinse, sondern nicht-abbildend geformt. Wegen der möglichen Axicon-ähnlichen Gestalt kann ein solches zweites optisches Element als Zerstreu-Axiconlinse bezeichnet werden. Ein derartiges zweites optisches Element soll lediglich die Kanten des Lichtempfängers, genauer von dessen lichtempfindlicher Fläche beziehungsweise von den jeweiligen Pixeln, scharf abbilden. Im Inneren zwischen diesen Kanten findet eine nicht-abbildende Umverteilung statt. Indem solche Verzerrungen und Unschärfen in Kauf genommen werden, gelingt es, mit nur einem einzigen zweiten optischen Element im Empfangspfad auszukommen, für eine scharfe Abbildung wäre ansonsten eine objektivartige Mehrfachanordnung erforderlich.

Bevorzugt weist eine Konturlinie längs eines Durchmessers durch das zweite optische Element mindestens eine knickähnliche Steigungsänderung auf, insbesondere im Zentrum. Damit unterscheidet sich das zweite optische Element deutlich von einer konkaven Linse, wo eine entsprechende Konturlinie nur glatt und gemächlich die Steigung ändert. Für das zweite optische Element ist nicht zwingend der Grenzfall eines Knicks im Sinne einer nicht-differenzierbaren Stelle erforderlich, aber doch eine sehr plötzliche und starke Änderung der Steigung, die zu einer ausgeprägten Kante oder Spitze führt. Für die vorzugsweise rotationssymmetrische Ausgestaltung des zweiten optischen Elements kann sich die knickähnliche Steigungsänderung im Zentrum befinden.

Das zweite optische Element weist vorzugsweise die Form eines negativen Kegels auf. Ein Kegel ist eine beispielhafte Geometrie, in dessen Spitze tatsächlich eine nichtdifferenzierbare Stelle liegt. Eine gewisse Verrundung zur vereinfachten Herstellung wird aber toleriert. Der Kegel ist als negativ bezeichnet, weil das zweite optische Element selbst nicht kegelförmig ist, sondern vielmehr eine entsprechende Aussparung aufweist. Damit ist das zweite optische Element das Komplement eines Kegels, der beispielsweise aus einem Zylinder mit gleicher Grundfläche ausgeschnitten ist. Eine radiale Krümmung des Kegelmantels führt zu einer ebenfalls denkbaren doppelbauchigen Form.

Das zweite optische Element weist bevorzugt in einer Parametrierung mit Krümmungsradius $1/c$ und Konuskonstante $k$ einen Wert der Konuskonstante $k < -2$ auf. Diese Parametrierung wird in der Figurenbeschreibung näher beschrieben. Bei einer sphärischen Linse wäre dagegen $k = 0$ und bei einer asphärischen Linse $|k| < 2$.

Das zweite optische Element weist bevorzugt in einer Parametrierung als "Odd Asphere" einen von Null verschiedenen Linearanteil auf. Auch auf diese Parametrierung wird später näher eingegangen. Bei einer "Odd Asphere" wird die $z$-Kontur als Polynom im Radius $r$ entwickelt, und die ungeraden Polynombeiträge werden im Gegensatz zu einer "Even Asphere" beachtet. Für das zweite optische Element besteht hier nun die Forderung, dass der Koeffizient $\beta_1$ des Linearanteils $r^1 = r$ nicht Null wird. Damit ist nicht nur ein marginaler Anteil ganz nahe bei Null im Sinne von Toleranzen oder dergleichen gemeint, sondern ein echter, signifikanter Beitrag von $\beta_1$, der die optischen Eigenschaften des zweiten optischen Elements maßgeblich mitbeeinflusst.

Das zweite optische Element ist bevorzugt als Mikroelement ausgebildet. Dementsprechend ist auch nur ein sehr kleines optisches Filter erforderlich. Ein Mikroelement ist besonders geeignet für den Fall einer Vielzahl von Lichtempfangselementen oder Pixeln, denen dann jeweils ein zweites optisches Element zugeordnet wird.

Ein Abstand zwischen dem Lichtempfänger und dem zweiten optischen Element liegt vorzugsweise nur in der Größenordnung einer Ausdehnung der lichtempfindlichen Fläche des Lichtempfängers. Damit ist gemeint, dass das zweite optische Element bei einer Kantenlänge d der lichtempfindlichen Fläche des Lichtempfängers höchstens den Abstand $n * d$ mit $n \leq 10$ oder sogar $n \leq 5$ beziehungsweise $n \leq 1$ hat, wobei der letztgenannte Fall bedeutet, dass das zweite optische Element näher an einer Kante des Lichtempfängers liegt als dessen gegenüberliegende Kante. Das zweite optische Element wird also ganz dicht vor dem Lichtempfänger angeordnet. Im Falle einer Vielzahl von Lichtempfangselementen liegt der Abstand nicht in der Größenordnung des Lichtempfängers, sondern des einzelnen Lichtempfangselements. Vorzugsweise ist das zweite optische Element mikromechanisch mit dem Lichtempfänger verbunden und dadurch richtig justiert.

Das optische Filter ist bevorzugt ein Bandpassfilter. Es schneidet also das Fremdlicht sowohl bei kleinen als auch bei großen Wellenlängen ab. Das Bandpassfilter kann erfindungsgemäß besonders schmalbandig sein, beispielsweise mit einer Breite von höchstens 50 nm bis hin zu höchstens 80 nm oder 100 nm. Ein Toleranzwellenlängenbereich für schräg einfallendes Licht muss nicht vorgehalten werden oder kann jedenfalls deutlich kleiner ausfallen als herkömmlich.

Das optische Filter ist bevorzugt auf der Rückseite des zweiten optischen Elements oder auf dem Lichtempfänger angeordnet, insbesondere als Beschichtung. Damit kann das optische Filter sehr kostengünstig und platzsparend hergestellt werden. Durch die Eigenschaften des zweiten optischen Elements ist die Winkelabhängigkeit bei der Ausprägung des optischen Filters mit dielektrischen Schichten stark reduziert, und deshalb ist kein winkelunabhängiges Filter wie eingefärbtes Glas mit problematischen Schwermetallen erforderlich, obwohl das technisch durchaus denkbar ist, auch in Kombination mit einer Beschichtung. Die Rückseite des zweiten optischen Elements ist vorzugsweise plan, wobei eine gewisse Krümmung zur Unterstützung der optischen Wirkung der Vorderseite denkbar bleibt und eine Beschichtung immer noch erlaubt. Alternativ oder zusätzlich zu einer Beschichtung der Rückseite des zweiten optischen Elements ist eine Beschichtung des Lichtempfängers beziehungsweise von dessen Lichtempfangselementen oder Pixeln denkbar.

Die Auswertungseinheit ist bevorzugt dafür ausgebildet, aus einer Lichtlaufzeit zwischen Aussenden des Sendelichts und Empfangen des remittierten Sendelichts einen Abstand des Objekts zu bestimmen. Damit entsteht ein entfernungsmessender Sensor. Gerade bei hohen Reichweiten, viel Umgebungslicht und/oder schlecht remittierenden, dunklen Objekten ist der Nutzlichtanteil häufig sehr gering, so dass ein Lichtlaufzeitverfahren stark von der verbesserten Fremdlichtunterdrückung profitiert.

Der Sensor ist vorzugsweise als Laserscanner ausgebildet und weist dafür eine bewegliche Ablenkeinheit zur periodischen Ablenkung des Sendelichts in dem Überwachungsbereich auf. Auf diese Weise wird der Überwachungsbereich gegenüber einem eindimensionalen Lichttaster erheblich vergrößert, nämlich auf eine Abtastebene mit Winkelbereich von bis zu 360° und bei zusätzlicher Ablenkung in Elevation und/oder Verwendung mehrere in Elevation versetzten Abtaststrahlen sogar auf einen dreidimensionalen Raumbereich. Der Laserscanner nutzt vorzugsweise ein Lichtlaufzeitverfahren zur Abstandsmessung und erzeugt damit unter Berücksichtigung der jeweiligen Winkel, unter denen das Sendelicht ausgesandt wird, 3D-Messpunkte innerhalb der Abtastebene oder sogar im Raum.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüche beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1      eine schematische Darstellung eines optoelektronischen Sensors;

Fig. 2      eine schematische Darstellung des Empfangspfades eines optischen Sensors;

Fig. 3a     ein beispielhafter Strahlenverlauf an einem doppelbauchigen zerstreuenden optischen Element im Empfangspfad vor einem Lichtempfänger;

Fig. 3b     eine Darstellung des Lichtflecks auf dem Lichtempfänger zu dem Strahlverlauf gemäß Figur 3a;

Fig. 4a     ein beispielhafter Strahlenverlauf ähnlich Figur 3a nun an einem kegelförmigen zerstreuenden optischen Element im Empfangspfad vor einem Lichtempfänger;

Fig. 4b     eine Darstellung des Lichtflecks auf dem Lichtempfänger zu dem Strahlverlauf gemäß Figur 4a;

Fig. 5a     eine Winkelverteilung des Empfangslichts auf einem optischen Filter ohne zerstreuendes optisches Element als Referenz;

Fig. 5b     eine verbesserte Winkelverteilung des Empfangslichts auf einem optischen Filter mit zerstreuendem optischen Element;

Fig. 6a     eine Mehrfachanordnung von diskreten Lichtempfangselementen mit jeweiligem zerstreuenden optischen Element;

Fig. 6b    eine Mehrfachanordnung von integrierten Lichtempfangselementen mit jeweiligem zerstreuenden optischen Element;

Fig. 7    eine Anordnung eines mikromechanisch mit dem Lichtempfänger verbundenen zerstreuenden optischen Elements;

Fig. 8    eine Darstellung eines zerstreuenden optischen Elements mit verrundeten Kanten;

Fig. 9a    ein beispielhafter Strahlenverlauf an einem zerstreuenden optischen Element mit deutlichem Abstand zum Lichtempfänger;

Fig. 9b    ein beispielhafter Strahlenverlauf an einem zerstreuenden optischen Element dicht an dem Lichtempfänger; und

Fig. 10    eine schematische Darstellung des Empfangspfades eines optischen Sensors nach dem Stand der Technik.

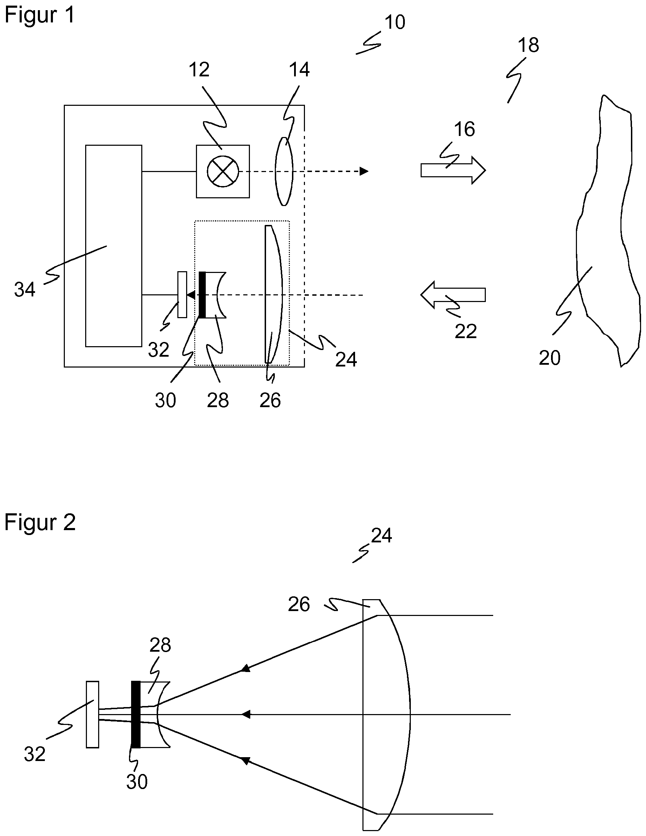

Figur 1 zeigt eine schematische Schnittdarstellung eines optoelektronischen Sensors 10. Ein Lichtsender 12, beispielsweise ein Laser oder eine LED, sendet über eine Sendeoptik 14 Sendelicht 16 in einen Überwachungsbereich 18. Der Lichtsender 12 weist vorzugsweise eine Laserlichtquelle auf, insbesondere einen Halbleiterlaser in Form eines VCSEL-Lasers oder Kantenemitters, aber auch einen anderen Laser wie einen Faserlaser. Damit ist ein sehr eng begrenzter Wellenlängenbereich des Sendelichts 16 möglich. Die verwendeten Lichtwellenlängen liegen typischerweise zwischen 200 nm und 2000 nm, insbesondere bei 660 nm, 850 nm, 900 nm und 1550 nm.

Trifft das Sendelicht 16 in dem Überwachungsbereich 18 auf ein Objekt 20, so kehrt ein Teil des Lichts als remittiertes Sendelicht 22 zu dem Sensor 10 zurück und wird dort von einer Empfangsoptik 24 mit einer Empfangslinse 26, einem zerstreuenden optischen Element 28 und einem optischen Filter 30 auf einen Lichtempfänger 32 gebündelt. Aufbau und Funktion der Empfangsoptik 24 werden später unter Bezugnahme auf die Figuren 2 bis 9 genauer erläutert. Der Lichtempfänger 32 ist beispielsweise eine PIN-Diode, eine APD (Avalanche Photo Diode, Lawinenphotodiode) oder eine Einzelphotonen-APD (SPAD, Single-Photon APD, Lawinenphotodiode im Geiger-Modus) beziehungsweise eine Mehrfachanordnung davon.

Eine Auswertungseinheit 34 steuert den Lichtsender 12 und wertet das Empfangssignal des Lichtempfängers 32 aus, um optisch erfassbare Informationen des Objekts 20 zu gewinnen, beispielsweise eine binäre Anwesenheitsfeststellung, eine Objektposition oder eine Farbe. Vorzugsweise bestimmt die Auswertungseinheit 34 einen Abstand des Objekts 20 mittels Triangulation oder eines Lichtlaufzeitverfahrens. Das dabei eingesetzte Lichtlaufzeitverfahren kann ein Einzelpuls- oder Mehrpulsverfahren, aber auch ein Phasenverfahren sein und ist an sich bekannt.

Der Grundaufbau des Sensors 10 gemäß Figur 1 ist nur beispielhaft zu verstehen. Es sind andere Anordnungen denkbar, beispielsweise ein koaxialer anstelle eines biaxialen Aufbaus, und auch andere Sensorarten als ein eindimensionaler Lichttaster, insbesondere ein Laserscanner.

Figur 2 zeigt nochmals vergrößert den Empfangspfad und die Empfangsoptik 24 gemäß Figur 1. Die Empfangslinse 26 ist eine Sammellinse mit möglichst großer Öffnung und kurzer Brennweite, um eine kleine Bauweise des Sensors 10 zu ermöglichen. Anstelle einer Einzellinse sind auch Mehrfachlinsen oder ein Objektiv sowie ein alternativer reflexiver Aufbau vorstellbar.

Das zerstreuende optische Element 28 ist hier als Zerstreulinse mit negativer Brennweite ausgebildet, vorzugsweise als Mikrolinse. Das zerstreuende optische Element 28 kann aus Glas oder Kunststoff ausgeführt sein, denn die thermische Ausdehnung und Brechungsindex-Änderung von Kunststoff ist bei der Anordnung in direkter Nähe des Lichtempfängers 32 nicht mehr wichtig.

Die plane oder alternativ zumindest leicht gekrümmte Rückseite des zerstreuenden optischen Elements 28 weist das optische Filter 30 als dielektrische Bandpassbeschichtung auf. Alternativ wären ein eigenständiges Filterelement oder eine Beschichtung auf dem Lichtempfänger 32 vorstellbar. Für einen Lichtsender 12 mit Laserlichtquelle bei schmaler optischer Bandbreite kann das optische Filter 30 auf eine Filterbandbreite von beispielsweise 50 nm oder 80 nm bei einer Zentralwellenlänge entsprechend der Wellenlänge des Lasers eingeengt werden.

Das zerstreuende optische Element 28 bewirkt ein verkleinertes virtuelles Zwischenbild des Lichtempfängers 32. Dieses verkleinerte virtuelle Zwischenbild wiederum wird dann von der Empfangslinse 26 in den Überwachungsbereich 18 abgebildet und damit ein vorteilhaft verkleinertes Sichtfeld (FOV, Field of View) erreicht. Außerdem werden durch das zerstreuende optische Element 28 die Einfallswinkel auf dem Lichtempfänger 32 verringert. Daher treten auch auf der Rückseite des zerstreuenden optischen Elements 28 nur kleinere Einfallswinkel auf. Dann muss auf die winkelabhängige Verschiebung des Passbandes des dort aufgebrachten optischen Filters 30 keine oder weniger Rücksicht genommen werden, und es kann folglich vorteilhaft enger ausgelegt werden.

Nun sollte das zerstreuende optische Element 28 möglichst dicht an dem Lichtempfänger 32 angeordnet sein, damit es selbst klein ausgeführt werden kann und auch nur eine kleine zu beschichtende Rückseite für die Beschichtung des optischen Filters 30 aufweist. Aus dieser Nähe ergibt sich dann die Anforderung, ein relativ großes Bildfeld scharf abzubilden. Anders formuliert erscheinen von der Position des zerstreuenden optischen Elements 28 die beiden Kanten des Lichtempfängers unter einem großen Winkelabstand, wobei gerade ein als SPAD ausgebildeter Lichtempfänger ohne weiteres eine Kantenlänge von 0,5 mm oder sogar 1 mm erreicht. Mit dieser scharfen Abbildung eines großen Bildfeldes ist eine einzelne Linse überfordert, dafür wären mehrere Linsen beziehungsweise ein Objektiv notwendig, was wiederum aus Kostengründen nicht in Betracht kommt. Folglich treten starke Abbildungsfehler auf, vor allem am Bildrand, d. h. vor allem die Kanten des Lichtempfängers 32 werden sehr unscharf abgebildet. Der Versuch, eine klassische Linse so auszulegen, dass vor allem die Kanten scharf abgebildet werden und dafür Unschärfen im Inneren in Kauf zu nehmen, verbessert die Lage nur wenig.

Deshalb ist es zwar möglich, als zerstreuendes optisches Element 28 eine klassische Zerstreulinse zu verwenden wie in Figur 2. Dabei wird die unscharfe Abbildung der Kanten des Lichtempfängers 32 einfach toleriert. Allerdings geht auf diese Weise schon Nutzlicht verloren, und es wird gleichzeitig vermehrt Fremdlicht detektiert.

Noch bessere Ergebnisse werden erreicht, wenn stattdessen als zerstreuendes optisches Element 28 eine nicht-abbildende, Axicon-ähnliche Linse verwendet wird. Damit wird nicht mehr versucht, das gesamte Bildfeld scharf abzubilden, d. h. die gesamte Fläche des Lichtempfängers 32, denn das kann eine einzelne Linse nicht befriedigend leisten. Anders ausgedrückt, wird keine scharfe Abbildung in dem Sinne versucht, dass die Punktbilder insgesamt sehr klein werden. Vielmehr ist das Ziel, dass das Punktbild für alle Feldpunkte, oder eigentlich auch nur für den äußersten Feldpunkt, ganz auf der geplanten Detektionsfläche des Lichtempfängers 32 verbleibt. Damit geht die Substruktur im Gegensatz zu einer klassischen scharfen Abbildung verloren, aber es wird weiterhin die gesamte Lichtmenge aufgesammelt und möglichst verlustarm auf den Lichtempfänger 32 gelenkt. Die relevante Lichtmenge wird gleichsam innerhalb des durch die Kanten des Lichtempfängers 32 gebildeten Randes begrenzt, so dass dem Lichtempfänger 32 nach Möglichkeit keine Lichtenergie des remittierten Sendelichts 22 verlorengeht. Im Innern dieses umlaufenden Randes ist die Abbildung dann zwar unscharf. Dieses auf den ersten Blick unvorteilhafte Verhalten wird aber gezielt in Kauf genommen, um die gewünschte virtuelle Blendenwirkung zu erhalten, d. h. möglichst nur Nutzlicht und möglichst alles Nutzlicht auf den Lichtempfänger 32 innerhalb des Randes zu lenken.

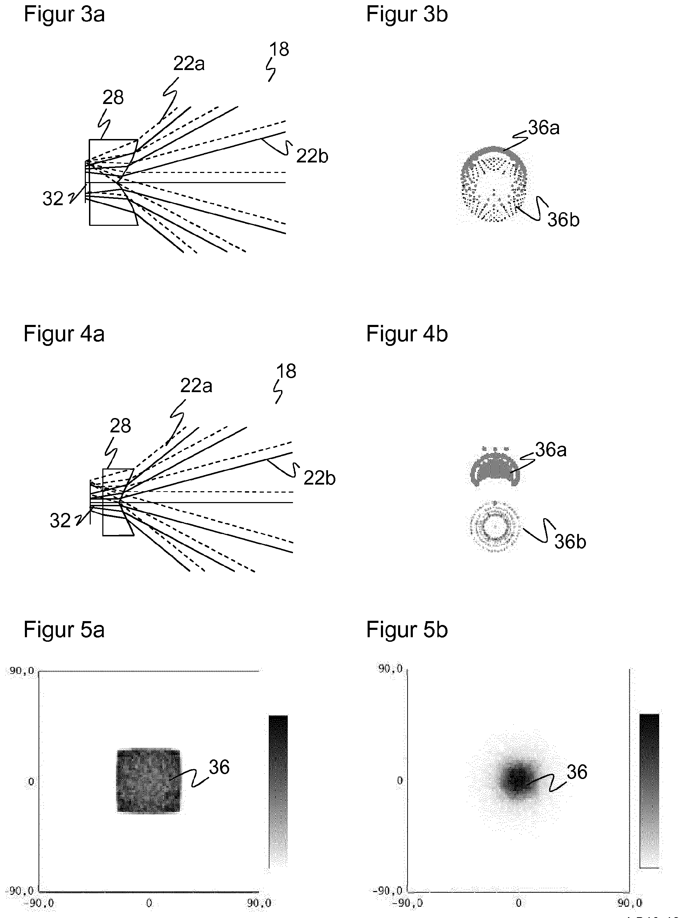

Aufbau und Verhalten verschiedener nicht-abbildender zerstreuender optischer Elemente 28 sollen nun genauer beschrieben werden. Figur 3a zeigt den Strahlenverlauf des remittierten Sendelichts 22a-b vergrößert nur in der Umgebung des zerstreuenden optischen Elements 28, wobei das optische Filter 30 an dessen Rückseite hier und in einigen weiteren Figuren der Übersicht halber nicht gezeigt ist. Es sind zwei Strahlenbündel des remittierten Sendelichts 22a-b mit verschiedenem Feldwinkel mittels durchgezogener beziehungsweise gestrichelter Linie dargestellt. Figur 3b zeigt die zugehörigen Empfangslichtflecken 36a-b in der Bildebene auf dem Lichtempfänger 32.

Das zerstreuende optische Element 28 weist eine Vorderseite mit einer Kontur ähnlich einem negativen oder zerstreuenden Axicon auf. Eine plastische Beschreibung einer negativen oder zerstreuenden Kontur ist, dass der Randbereich dicker ist als das Zentrum, wie bei einer klassischen konkaven Zerstreulinse. Nicht-abbildend wird sie beispielsweise durch eine Stelle mit scharfer Steigungsänderung, im Grenzfall einem nicht differenzierbaren Knick. Im Beispiel der Figur 3a ergibt sich eine doppelbauchige Kontur mit einer Art Knick oder Spitze in der Mitte.

Als ein konkretes Zahlenbeispiel für einen typischen Anwendungsfall ist für den Strahlenverlauf des remittierten Sendelichts 22a-b in Figur 3a und die Empfangslichtflecke 36a-b in Figur 3b eine Brennweite der Empfangslinse 26 von f=50 mm und deren Empfangsaperatur ein Durchmesser 0=80mm angenommen, woraus sich ein Winkel der zusammenlaufenden Lichtstrahlen des remittierten Sendelichts 22a-b hinter der Empfangslinse 26 von $\arctan(40/50) \approx 38,7°$ ergibt. Die Empfangslinse 26 ist optimiert für die Abbildung eines einzelnen axialen Gegenstandspunktes im Unendlichen, so dass der Empfangslichtfleck für kollimiertes Licht entlang der optischen Achse beugungsbegrenzt klein wäre. Das mit gestrichelter Linie dargestellte remittierte Sendelicht 22a entspricht einem Feldwinkel von 0,23°, das mit durchgezogener Linie dargestellte remittierte Sendelicht 22b einem Feldwinkel von 0°. Ein Feldwinkel ±0,23° wiederum entspricht einem 0,4 mm großen Empfangslichtfleck beispielsweise auf einem 0,8 mm bis 1 mm großen SPAD des Lichtempfängers 32.

Die Form des zerstreuenden optischen Elements 28 ist nun so ausgelegt, dass stattdessen auf dem SPAD ein 0,8 mm großer Empfangslichtfleck entsteht, es weist also einen Abbildungsmaßstab von zwei auf. In einer später noch genauer betrachteten Parametrierung als "Odd Asphere" hat sie die Parameter $\beta_1$ = -0,9 und $\beta_2$ = 0,5, eine Mittendicke von 0,5 mm und einen Abstand ihrer Rückseite zu dem SPAD von etwa 0,14 mm. Der Abstand zwischen dem zerstreuenden optischen Element 28 und der Empfangslinse 26 wiederum ist so gewählt, dass sich die Strahlen für die gegenüberliegenden Kanten des SPADs in diesem Bildschnitt noch nicht ganz getrennt haben. Das sieht man anschaulich dadurch, dass einige gestrichelt gezeigte Strahlen des remittierten Sendelichts 22a noch durch die untere Hälfte des zerstreuenden optischen Elements 28 laufen.

In Figur 3b ist zu erkennen, dass auch die Strahlen am Feldrand, die auf eine Kante des SPADs beziehungsweise des Lichtempfängers 32 zielen, so abgelenkt werden, dass sie innerhalb des Zielbereichs von ±0,4 mm bleiben. In diesem Sinne bildet das zerstreuende optische Element 28 noch scharf ab, obwohl auch dieses Punktbild bei weitem keine kleine Ausdehnung hat. Das Punktbild zu einem Feldwinkel von 0° ist sogar noch größer, hier wird also die Mitte noch unschärfer abgebildet. Die Abbildungseigenschaften mit den großen Punktbildern sehen aber nur auf den ersten Blick schlecht aus. Das zerstreuende optische Element 28 ist hervorragend dazu geeignet, das remittierte Sendelicht 22a-b auf dem Lichtempfänger 32 zu sammeln und dabei eine Fläche mit doppelter Querabmessung auf dem Lichtempfänger 32 auszuleuchten, ohne Lichtstrahlen über den gewünschten Rand hier bei ±0,4 mm hinaus zu lenken, wo sie nicht mehr detektiert werden könnten.

Die Figuren 4a und 4b zeigen ein weiteres Beispiel mit einem nun konus- oder kegelförmigen zerstreuenden optischen Element 28 ohne nochmalige konkrete beispielhafte Zahlenangaben. Im Querschnitt sieht dieses zerstreuende optische Element 28 aus wie zwei Prismen, räumlich betrachtet handelt es sich typischerweise um einen Kreiszylinder oder einen ähnlichen Körper mit einer kegelförmigen Aussparung. Die Abbildung des Randes in dem Empfangslichtfleck 36a ist nicht mehr ganz so scharf auf die Kante begrenzt. Der vergrößerte Lichtfleck auf dem Lichtempfänger 32 wird also am Rand leicht verwaschen. Dennoch ist auch diese Auslegung des zerstreuenden optischen Elements 28 noch sehr gut und insbesondere besser verwendbar als eine klassische Zerstreulinse. Ergänzend wird für Erläuterung und Schlussfolgerungen auf die Figuren 3a und 3b verwiesen.

Diese Form des zerstreuenden optischen Elements 28 lässt sich in einer Parametrierung für z als Pfeilhöhe in Abhängigkeit vom Abstand r von der Linsenmitte mit Krümmungsradius 1/c und Konuskonstante $k$ darstellen als

$$z = \frac{cr^2}{1+\sqrt{1-(1+k)c^2r^2}},$$

wobei für eine Kegelform $k < -2$ gefordert wird. Dagegen wäre bei einer sphärischen Linse $k = 0$ und bei einer Asphäre meist $|k| < 2$. Die Form ist also im mathematischen Sinne eine Hyperbel.

Die gleiche Forderung lässt sich für $k$ in der erweiterten Parametrierung der Linsenform als "even asphere" aufstellen:

$$z = \frac{cr^2}{1+\sqrt{1-(1+k)c^2r^2}} + \alpha_1 r^2 + \alpha_2 r^4 + \dots$$

In der Parametrierung der Linsenform als "odd asphere"

$$z = \frac{cr^2}{1 + \sqrt{1 - (1 + k)c^2r^2}} + \beta_1 r^1 + \beta_2 r^2 + \beta_3 r^3 + \beta_4 r^4 + \dots$$

kann statt dem auch hier möglichen $k < -2$ auch $k = 0$ und ein signifikant von Null verschiedener Wert $\beta_1$ gewählt werden. Bei sphärischen Linsen und abbildenden Asphären gilt stattdessen $\beta_1 = 0$. Außerdem ist in zumindest einigen bevorzugten Ausführungsformen $\beta_2$ ebenfalls signifikant von Null verschieden und vorzugsweise auch positiv.

Verallgemeinert lässt sich sagen, dass das zerstreuende optische Element 28 auf einem Großteil seiner genutzten Fläche von mindestens 50%, 75% oder sogar 80% beziehungsweise 90% so verläuft, dass diese extrapolierte Fläche auf eine scharfkantige Spitze in die Mitte zuläuft. Das zerstreuende optische Element 28 wird gleichsam im Mittelpunkt geknickt, und dadurch ergeben sich gegenüber einer klassischen Zerstreulinse Freiheitsgrade, die es ermöglichen, Strahlen getrennt zu behandeln und auf unterschiedliche Kanten des Lichtempfängers 32 zulaufen zu lassen. Somit wird eine scharfe Abbildung des gesamten Randes mit nur einem optischen Element erreicht, was mit einer klassischen Zerstreu- oder auch Sammellinse nicht möglich wäre. Das zerstreuende optische Element 28 ist im Übrigen vorzugsweise rotationssymmetrisch, auch wenn davon im Rahmen abgewichen werden kann, ohne die Funktion zu stark zu verschlechtern.

Figur 5a-b illustriert noch einmal den Effekt des zerstreuenden optischen Elements 28. Dabei zeigt Figur 5a die Winkelverteilung ohne das zerstreuende optische Element 28 und Figur 5b mit einem zerstreuenden optischen Elements 28 wie zu den Figuren 3a-b und 4a-b vorgestellt. Es ist deutlich zu erkennen, dass die Verteilung des Einfallswinkels rechts mit dem zerstreuenden optischen Element 28 deutlich kleinere Werte annimmt. Daher kann das optische Filter 30 im Fall gemäß Figur 5b deutlich enger gewählt werden, ohne viel Lichtintensität zu verlieren, weil hier die vorkommenden Einfallswinkel deutlich begrenzt sind. Grob gesagt wird der Einfallswinkelbereich halbiert, das optische Filter 30 muss demnach beispielsweise statt mit ±40° nur noch mit ±20° zurechtkommen.

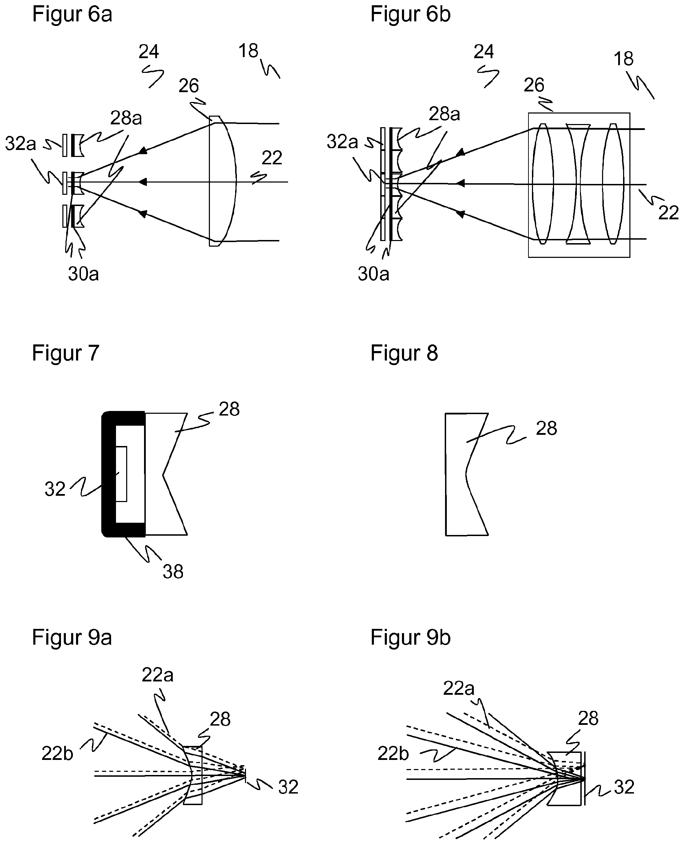

Figur 6a zeigt eine weitere Ausführungsform des Empfangspfades. Es wurde oben schon erwähnt, dass der Lichtempfänger 32 auch mehrere Lichtempfangselemente 32a aufweisen kann. In Figur 6a ist dies eine Anordnung einer Vielzahl von diskreten Lichtempfangselementen 32a, die beispielsweise SPADs oder auch Photodioden beziehungsweise APDs sein können. Die Empfangsoptik 24 umfasst dann vorzugsweise weiterhin nur eine gemeinsame Empfangslinse 26, jedoch ein eigenes zerstreuendes optisches Element 28a für jedes Lichtempfangselement 32a.

Figur 6b zeigt eine Alternative mit einer Matrixanordnung von auf dem Lichtempfänger 32 integrierten Lichtempfangselementen 32a oder Pixeln, beispielsweise einem Bildsensor mit einer Zeilen- Matrix- oder sonstigen Anordnung. Dieser Matrixanordnung wird ein passendes Raster von mehreren zerstreuenden optischen Elementen 28a zugeordnet, die mehrere virtuelle Blenden erzeugen. Außerdem ist hier die Empfangslinse 26 durch ein mehrlinsiges Objektiv ersetzt, was aber bereits zu allen Ausführungsformen als mögliche Alternative beschrieben wurde.

Figur 7 zeigt eine beispielhafte Bauform des zerstreuenden optischen Elements 28 in mikromechanischer Verbindung mit dem Lichtempfängers 32. Beispielsweise ersetzt das zerstreuende optische Element 28 ein Deckglas eines Elektronikgehäuses 38 für den Lichtempfänger 32. Die mikromechanische Verbindung garantiert dann auch automatisch die nötige genaue Positionsgenauigkeit zwischen zerstreuendem optischen Element 28 und Lichtempfänger 32.

Figur 8 zeigt eine weitere Ausführungsform des zerstreuenden optischen Elements 28. Im Gegensatz zu der bisher gezeigten kegel- oder keilförmigen Aussparung ist hier die Spitze oder der Knick in der Mitte und entsprechend bei Bedarf auch an den Außenkanten verrundet. Das erleichtert die Herstellung des zerstreuenden optischen Elements 28. Der Flächenanteil dieser zentralen Verrundung sollte nicht zu groß werden, beispielsweise auf 20% begrenzt bleiben, um die Funktion nicht gravierend zu verschlechtern und eine klar von einer klassischen, abbildenden Zerstreulinse verschiedene Form beizubehalten.

Die Figuren 9a-b illustrieren, warum es vorteilhaft ist, das zerstreuende optische Element 28 in unmittelbarer Nähe zu dem Lichtempfänger 32 zu positionieren. Beispielsweise beträgt dazu der Abstand des Axicon-Apex bis zur lichtempfindlichen Fläche des Lichtempfängers höchstens das 5-fache der Abmessung der lichtempfindlichen Fläche beziehungsweise eines einzelnen Lichtempfangselements 32a oder Pixels.

Bei zu großem Abstand wie in Figur 9a treten die Lichtstrahlen des remittierten Sendelichts 22a für die obere Kante des Lichtempfängers 32 und die Lichtstrahlen des remittierten Sendelichts 22b für die untere Kante des Lichtempfängers 32 noch durch dasselbe Oberflächenelement des zerstreuenden optischen Elements 28, das also seine Funktion gar nicht sinnvoll ausübt. Die Lichtstrahlen werden undifferenziert in dieselbe Richtung umgelenkt. Dadurch verschiebt sich der Einfallswinkelbereich, wird aber nicht schmaler. Dabei sind die gestrichelten und durchgezogenen Linien des remittierten Sendelichts 22a-b analog zu Figur 3a und 4a zu verstehen.

Mit einer Anordnung des zerstreuenden optischen Elements 28 in unmittelbarer Nähe zu dem Lichtempfänger wie in Figur 9b wird der gewünschte Effekt erreicht, der Einfallswinkelbereich wird deutlich verkleinert.

## Patentansprüche

1. Optoelektronischer Sensor (10) zur Erfassung eines Objekts (20) in einem Überwachungsbereich (18) mit einem Lichtsender (12) zum Aussenden von Sendelicht (16) eines Wellenlängenbereichs, mit einem Lichtempfänger (32) zum Erzeugen eines Empfangssignals aus dem an dem Objekt (20) remittierten Sendelicht (22), mit einer dem Lichtempfänger (32) vorgeordneten Empfangsoptik (24), die mindestens ein erstes optisches Element (26) zur Fokussierung des remittieren Sendelichts (22), ein zweites optisches Element (28) zur Verringerung des Einfallswinkels und ein auf den Wellenlängenbereich abgestimmtes optisches Filter (30) zur Unterdrückung von Fremdlicht aufweist, sowie mit einer Auswertungseinheit (34), die dafür ausgebildet ist, aus dem Empfangssignal eine Objektinformation zu erzeugen, wobei das zweite optische Element (28) lichtzerstreuende Eigenschaften aufweist, **dadurch gekennzeichnet, dass** das zweite optische Element als Zerstreu-Axiconlinse nicht-abbildende Eigenschaften aufweist und lediglich Kanten der lichtempfindlichen Fläche des Lichtempfängers (32) scharf abbildet, während im Inneren zwischen diesen Kanten eine nicht-abbildende Umverteilung stattfindet.

2. Sensor (10) nach Anspruch 1, wobei der Lichtempfänger (32) eine Vielzahl von Lichtempfangselementen (32a) aufweist, insbesondere Lawinenphotodiodenelemente im Geiger-Modus.

3. Sensor (10) nach einem der vorhergehenden Ansprüche, wobei eine Konturlinie längs eines Durchmessers durch das zweite optische Element (28) mindestens eine knickähnliche Steigungsänderung aufweist, insbesondere im Zentrum.

4. Sensor (10) nach einem der vorhergehenden Ansprüche, wobei das zweite optische Element (28) die Form eines negativen Kegels aufweist.

5. Sensor (10) nach einem der vorhergehenden Ansprüche, wobei das zweite optische Element (28) in einer Parametrierung mit Krümmungsradius und Konuskonstante einen Wert der Konuskonstante kleiner als .2 aufweist.

6. Sensor (10) nach einem der Ansprüche 1 bis 4,

wobei das zweite optische Element (28) in einer Parametrierung als Odd Asphere einen von Null verschiedenen Linearanteil aufweist.

7. Sensor (10) nach einem der vorhergehenden Ansprüche,
   wobei das zweite optische Element (28) als Mikroelement ausgebildet ist.

8. Sensor (10) nach einem der vorhergehenden Ansprüche,
   wobei ein Abstand zwischen dem Lichtempfänger (32) und dem zweiten optischen Element (28) nur in der Größenordnung einer Ausdehnung der lichtempfindlichen Fläche des Lichtempfängers (32) liegt.

9. Sensor (10) nach einem der vorhergehenden Ansprüche,
   wobei das optische Filter (30) ein Bandpassfilter ist.

10. Sensor (10) nach einem der vorhergehenden Ansprüche,
    wobei das optische Filter (30) auf der Rückseite des zweiten optischen Elements (28) oder auf dem Lichtempfänger (32) angeordnet ist, insbesondere als Beschichtung.

11. Sensor (10) nach einem der vorhergehenden Ansprüche,
    wobei die Auswertungseinheit (34) dafür ausgebildet ist, aus einer Lichtlaufzeit zwischen Aussenden des Sendelichts (16) und Empfangen des remittierten Sendelichts (22) einen Abstand des Objekts (20) zu bestimmen.

12. Sensor (10) nach einem der vorhergehenden Ansprüche,
    der als Laserscanner ausgebildet ist und dafür eine bewegliche Ablenkeinheit zur periodischen Ablenkung des Sendelichts (16, 22) in dem Überwachungsbereich (18) aufweist.

13. Verfahren zur Erfassung eines Objekts (20) in einem Überwachungsbereich (18), bei dem Sendelicht (16) in einem Wellenlängenbereich ausgesandt, nach Remission an dem Objekt (20) als remittiertes Sendelicht (22) durch eine Empfangsoptik (24) wieder empfangen und von einem Lichtempfänger (32) in ein Empfangssignal gewandelt wird, um aus dem Empfangssignal eine Objektinformation zu erzeugen, wobei die Empfangsoptik (24) das remittierte Sendelicht (22) mit einem ersten optischen Element (26) fokussiert, mit einem zweiten optischen Element (28) den Einfallswinkel des remittierten Sendelichts (22) verringert und mit einem auf den Wellenlängenbereich abgestimmten optischen Filter (30) Fremdlicht unterdrückt,
    wobei das zweite optische Element (28) den Einfallswinkel durch lichtzerstreuende Eigenschaften verringert,
    **dadurch gekennzeichnet,**
    **dass** das zweite optische Element als Zerstreu-Axiconlinse mit nicht-abbildenden Eigenschaften lediglich Kanten der lichtempfindlichen Fläche des Lichtempfängers (32) scharf abbildet, während im Inneren zwischen diesen Kanten eine nicht-abbildende Umverteilung stattfindet.

## Claims

1. An optoelectronic sensor (10) for detecting an object (20) in a monitoring area (18), having a light transmitter (12) for transmitting transmitted light (16) of a wavelength range, a light receiver (32) for generating a received signal from the remitted transmitted light (22) remitted at the object (20), receiving optics (24) arranged in front of the light receiver (32), the receiving optics (24) having at least one first optical element (26) for focusing the remitted transmitted light (22), a second optical element (28) for reducing the angle of incidence and an optical filter (30) adapted to the wavelength range for suppressing interference light, the sensor (10) also having an evaluation unit (34) that is configured to generate object information from the received signal, wherein the second optical element (28) has light-diffusing properties,
   **characterized in that** the second optical element has non-imaging properties as a diverging axicon lens and generates a sharp image only of edges of the photosensitive area of the light receiver (32), while inside between these edges there is a non-imaging redistribution.

2. The sensor (10) according to claim 1,
   wherein the light receiver (32) comprises a plurality of light receiving elements (32a), in particular avalanche photodiode elements in Geiger mode

3. The sensor (10) according to one of the preceding claims,

wherein a contour line along a diameter through the second optical element (28) has at least one kink-like change in slope, particularly in the centre.

4. The sensor (10) according to one of the preceding claims,
   wherein the second optical element (28) has the shape of a negative cone.

5. The sensor (10) according to one of the preceding claims,
   wherein the second optical element (28) in a parameterization with radius of curvature and cone constant has a value of the cone constant smaller than -2.

6. The sensor (10) according to one of claims 1 to 4,
   wherein the second optical element (28) has a non-zero linear component in a parameterization as an odd asphere.

7. The sensor (10) according to one of the preceding claims,
   wherein the second optical element (28) is formed as a microelement.

8. The sensor (10) according to one of the preceding claims,
   wherein a distance between the light receiver (32) and the second optical element (28) is only of the order of an extension of the photosensitive area of the light receiver (32).

9. The sensor (10) according to one of the preceding claims,
   wherein the optical filter (30) is a bandpass filter.

10. The sensor (10) according to one of the preceding claims,
    wherein the optical filter (30) is arranged on the rear side of the second optical element (28) or on the light receiver (32), in particular as a coating.

11. The sensor (10) according to one of the preceding claims,
    wherein the evaluation unit (34) is configured to determine a distance of the object (20) from a light time of flight between the transmission of the transmitted light (16) and the reception of the remitted transmitted light (22).

12. The sensor (10) according to one of the preceding claims,
    which is configured as a laser scanner and has a movable deflection unit for periodically deflecting the transmitted light (16, 22) in the monitoring area (18).

13. A method for detecting an object (20) in a monitored area (18), wherein transmitted light (16) of a wavelength range is transmitted, is received again by receiving optics (24) after remission at the object (20) as remitted transmitted light (22) and is converted into a received signal by a light receiver (32) in order to generate object information from the received signal, the receiving optics (24) focusing the reflected transmitted light (22) with a first optical element (26), reducing the angle of incidence of the remitted transmitted light (22) with a second optical element (28) and suppressing interference light with an optical filter (30) adapted to the wavelength range,
    wherein the second optical element (28) reduces the angle of incidence by light-diffusing properties,
    **characterized in that** the second optical element as a diverging axicon lens with non-imaging properties generates a sharp image only of edges of the photosensitive area of the light receiver (32), while inside between these edges there is a non-imaging redistribution.

**Revendications**

1. Capteur optoélectronique (10) pour la détection d'un objet (20) dans une zone à surveiller (18), comportant un émetteur de lumière (12) pour émettre une lumière d'émission (16) d'une plage de longueurs d'onde, un récepteur de lumière (32) pour générer un signal de réception à partir de la lumière d'émission (22) réémise sur l'objet (20), une optique de réception (24) disposée en amont du récepteur de lumière (32) et pourvue d'au moins un premier élément optique (26) pour focaliser la lumière d'émission (22) réémise, d'un deuxième élément optique (28) pour réduire l'angle d'incidence et d'un filtre optique (30) accordé sur la plage de longueurs d'onde pour supprimer la lumière parasite, et comportant une unité d'évaluation (34) qui est réalisée pour générer une information relative à l'objet à partir du signal de réception, le deuxième élément optique (28) présentant des propriétés de diffusion de lumière,

**caractérisé en ce que**
le deuxième élément optique, en tant que lentille divergente du type axicon, a des propriétés non formatrices d'images et ne forme des images nettes que des bords de la surface photosensible du récepteur de lumière (32), tandis qu'une redistribution non formatrice d'images a lieu à l'intérieur entre ces bords.

2. Capteur (10) selon la revendication 1,
   dans lequel
   le récepteur de lumière (32) comporte une pluralité d'éléments récepteurs de lumière (32a), en particulier des éléments photodiodes à avalanche en mode Geiger.

3. Capteur (10) selon l'une des revendications précédentes,
   dans lequel
   une ligne de contour le long d'un diamètre à travers le deuxième élément optique (28) présente au moins un changement de pente en forme de coude, en particulier au centre.

4. Capteur (10) selon l'une des revendications précédentes,
   dans lequel
   le deuxième élément optique (28) a la forme d'un cône négatif.

5. Capteur (10) selon l'une des revendications précédentes,
   dans lequel
   dans un paramétrage avec un rayon de courbure et une constante de cône, le deuxième élément optique (28) présente une valeur de la constante de cône inférieure à -2.

6. Capteur (10) selon l'une des revendications 1 à 4,
   dans lequel
   dans un paramétrage comme asphère impaire (Odd Asphere), le deuxième élément optique (28) présente une composante linéaire non nulle.

7. Capteur (10) selon l'une des revendications précédentes,
   dans lequel
   le deuxième élément optique (28) est réalisé sous forme de micro-élément.

8. Capteur (10) selon l'une des revendications précédentes,
   dans lequel
   une distance entre le récepteur de lumière (32) et le deuxième élément optique (28) est seulement de l'ordre de grandeur d'une extension de la surface photosensible du récepteur de lumière (32).

9. Capteur (10) selon l'une des revendications précédentes,
   dans lequel
   le filtre optique (30) est un filtre passe-bande.

10. Capteur (10) selon l'une des revendications précédentes,
    dans lequel
    le filtre optique (30) est disposé sur la face arrière du deuxième élément optique (28) ou sur le récepteur de lumière (32), en particulier sous forme de revêtement.

11. Capteur (10) selon l'une des revendications précédentes,
    dans lequel
    l'unité d'évaluation (34) est réalisée pour déterminer une distance de l'objet (20) à partir d'un temps de parcours de lumière entre l'émission de la lumière d'émission (16) et la réception de la lumière d'émission réémise (22).

12. Capteur (10) selon l'une des revendications précédentes,
    qui est réalisé sous forme de scanner laser et qui comprend à cet effet une unité de déviation mobile pour la déviation périodique de la lumière d'émission (16, 22) dans la zone à surveiller (18).

13. Procédé de détection d'un objet (20) dans une zone à surveiller (18), dans lequel
    une lumière d'émission (16) est émise dans une plage de longueurs d'onde, après réémission sur l'objet (20) elle est reçue en tant que lumière d'émission réémise (22) par une optique de réception (24), et elle est convertie en un signal de réception par un récepteur de lumière (32), afin de générer une information relative à l'objet à partir du signal de réception,

l'optique de réception (24) focalise la lumière d'émission réémise (22) avec un premier élément optique (26), elle réduit l'angle d'incidence de la lumière d'émission réémise (22) avec un deuxième élément optique (28), et elle supprime la lumière parasite avec un filtre optique (30) accordé sur la plage de longueurs d'onde,

le deuxième élément optique (28) réduit l'angle d'incidence par des propriétés de diffusion de lumière,

**caractérisé en ce que**

le deuxième élément optique, en tant que lentille divergente du type axicon, ayant des propriétés non formatrices d'images, ne forme des images nettes que des bords de la surface photosensible du récepteur de lumière (32), tandis qu'une redistribution non formatrice d'images a lieu à l'intérieur entre ces bords.

Figur 1

Figur 2

Figur 3a

Figur 3b

Figur 4a

Figur 4b

Figur 5a

Figur 5b

Figur 6a

Figur 6b

Figur 7

Figur 8

Figur 9a

Figur 9b

Figur 10
(Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19757849 B4
- EP 2910969 A
- EP 3339887 A1
- DE 102015224715 A1
- US 4106855 A
- US 20170289524 A1
- US 4184749 A
- WO 2019025222 A1
- US 20180052234 A1
- WO 2017146913 A1